Europäisches Patentamt

(19) European Patent Office (11) Publication number: **0 025 122**

Office européen des brevets **A1**

(12) **EUROPEAN PATENT APPLICATION**

(21) Application number: **80104694.7** (51) Int. Cl.³: **G 02 B 21/26**

(22) Date of filing: **09.08.80**

(30) Priority: **13.08.79 US 65890**
**14.07.80 US 167740**

(43) Date of publication of application:
**18.03.81 Bulletin 81/11**

(84) Designated Contracting States:
**AT BE CH DE FR GB IT LI LU NL SE**

(71) Applicant: **Elgart, Alan C.**
**RD4, P.O. Box 70B Beakes Road**
**New Windsor New York(US)**

(72) Inventor: **Elgart, Alan C.**
**RD4, P.O. Box 70B Beakes Road**
**New Windsor New York(US)**

(74) Representative: **Wasmeier, Alfons et al,**
**Patent Attorneys A. Wasmeier H. Graf Postfach 382**
**Greflingerstrasse 7**
**D-8400 Regensburg 1(DE)**

(54) **A microscope stage.**

(57) A stage (15) for a microscope comprises a base having an aperture (16) therein for supporting an article (73) to be viewed. A vacuum device (18) extends through the body for holding the article on the aperture. An illumination device (20) extends through the body for illuminating the aperture. The stage has means (54, 65) whereby the position of items within the article to be viewed can be located.

./...

EP 0 025 122 A1

FIG.1

## A MICROSCOPE STAGE

This application is a continuation in part of my copending application, Ser. No. 065.890 filed August 13, 1979, now abandoned.

While the invention is subject to a wide range of applications, it is especially suited for use with a microscope and will be particularly described in that connection.

When using a microscope to view a small object such as a gem, it has been difficult to hold th-e gem and still be able to turn it in many directions to view its various facets. Also, there is a need to keep the specimen substantially in focus as it is turned. Further, illumination through the specimen is preferable in order to more clearly see its structure. In addition, it is necessary to be able to locate inclusions within the gem and be able to describe the position of these imperfections with certainty.

U.S. Patent No. 3.723.006, to Thomas, discloses a hollow vacuum probe which is used with a microscope and can be moved with the specimen remaining in focus.

US Patent No. 3.778.131, to Waneski, discloses a microscope having a vacuum pick-up needle and spot illuminator.

It is an object of the present invention to provide a stage for a microscope which obviates one or more of the limitations and disadvantages of the described prior arrangements.

It is a further object of the present invention to provide a stage for a microscope which allows for movement of the specimen while it remains in focus.

A further object of the present invention is to provide a stage for a microscope which employs a vacuum to hold the specimen.

It is another object of the present invention to provide a stage for a microscope having an illumination device extending there through.

It is still a further object of the present invention to provide a means for locating imperfections and mapping their position.

It is yet a further object of the present invention to provide a stage for a microscope which is relatively inexpensive to manufacture.

Accordingly, there has been provided a stage for a microscope comprising a base with an aperture therein for supporting an article to be viewed. A vacuum device extends through the body for holding the article on the aperture. An illumination device extends through the body for illuminating the aperture. Means are provided for locating imperfections in the article to be viewed.

For a better understanding of the present invention, together with other and further objects thereof, reference is made to the following description, taken in connection with the accompanying drawings, while its scope will be pointed out in the appended claims.

Fig. 1 is a perspective view of a microscope stage and control box in accordance with the present invention;

Fig. 2 is a front elevational view of the fore-part of the stage;

Fig. 3 is a side view, partly in cross-section, of the illumination device extending through the vacuum device; and

Fig. 4 is a schematic illustration of the light source for the illumination device.

Generally, a stage 10 for a microscope 12 comprises a base section 14 having a holder assembly 15 therein for supporting an article to be viewed. A vacuum device 18 extends through the holder assembly 15 for holding the article on the aprture 16. An illumination device 20 extends through the holder assembly 15 for illuminating the aprture 16.

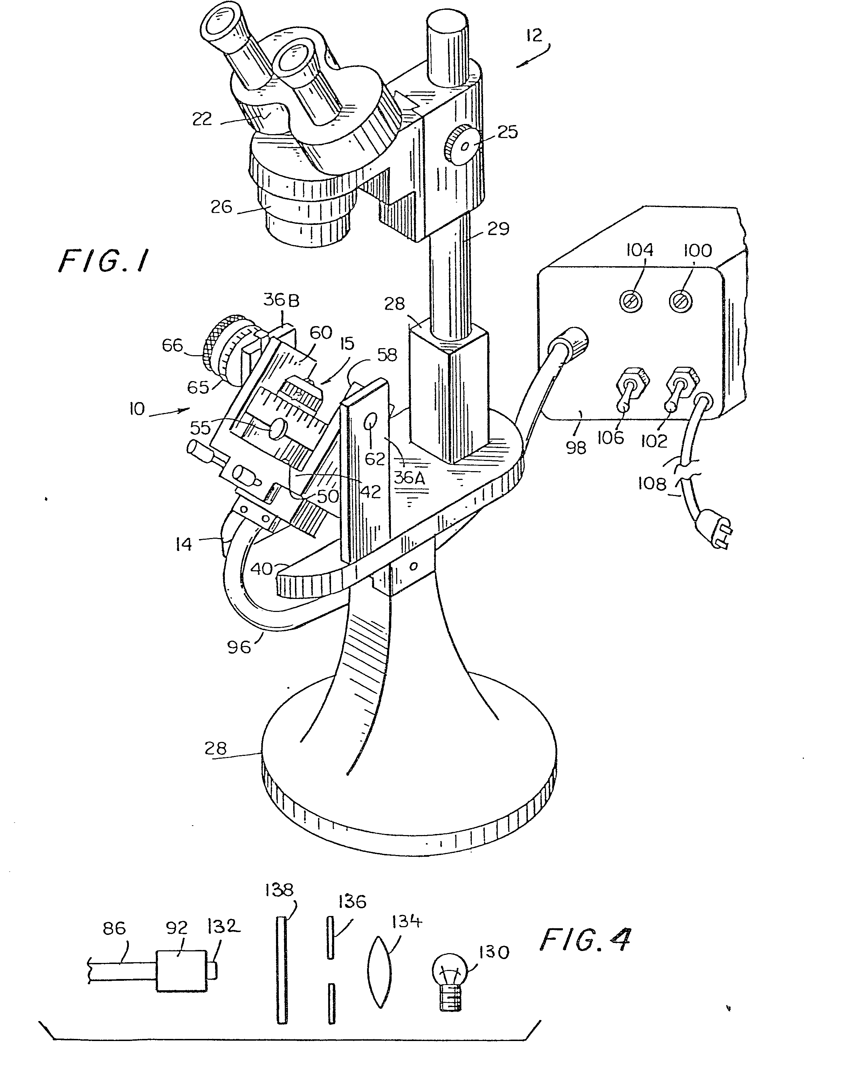

Referring to Fig. 1, there is illustrated a microscope 12 having an optical assembly 22 for binocular viewing. Optical assembly 22 has a magnification adjustment 26 for changing the magnifying power of microscope 12 as well as a recticle containing a reference line. Optical assembly 12 is supported by a supporting column 29 which is held by a support block 28. Optical assembly 22 can be adjusted for focusing by use of a focusing knob 25.

Support block 28 is firmly attached to the rear most portion of a base section 14 which is part of stage 10. The foremost portion of base section 14 contains a slot 40 which serves to freely admit a service conduit 96. Stage 10 and micrscope 12 is seen to be supported by a support base 28 which is relatively heavy and prevents the stage 10 and microscope 12 from being unstable when placed on a supporting surface.

Service conduit 96 enters a control box 98 which provides vacuum and illumination to stage 10. Control box 98 contains an electrical supply cord 108 which brings power into control box 98 when it is inserted into a wall recepticle (not shown). An illumination switch 102 controls illumination provided to stage 10 and a vacuum switch 106 controls vacuum provided to stage 10. Fuses 100 and 104 provide electrical overload protection to respective illumination and vacuum circuits.

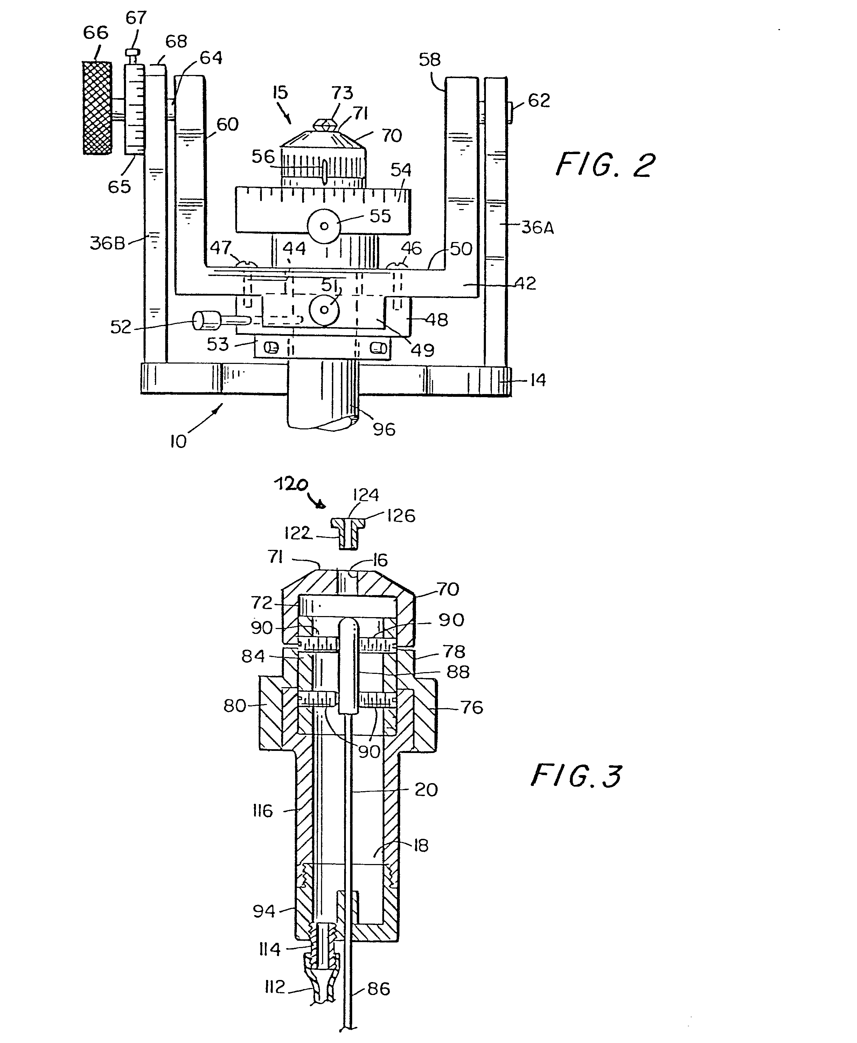

Fig. 2 best shows the details of stage 10. The base section 14 is shown supporting a pair of wall structures 36A and 36B which are firmly joined to base section 14. A movable top section 42 consisting of a face 50 firmly joined to a pair of sides 58 and 60 is shown pivotally supported on stage 10. The pivotal support is provided by a pivot rod 62 and a pivot rod 64. Pivot rod 62 and pivot rod 64 are rigidly attached to respective sides 58 and 60 but are able to rotatably move in respective walls 36A and 36B. Pivot rod 64 has attached to the end extending beyond wall 36B a knob 66, an elevation circle 65 and a lock screw 67 which can be adjusted. Elevation circle 65 has engraved on its surface angular calibration marks which are referenced to an index 68 which is affixed to the topmost surface of wall 36B.

Face 50 has rigidly attached an apron 49 which is used to anchor a lead screw 51. Lead screw 51 is free to rotate in apron 49 but is held axially captive. The threaded portion of lead screw 51 engages a threaded hole (not shown) in a carriage collar 48 and is used to slidably move carriage collar 48 towards and away from the apron 49 part of face 50. Face 50 also contains a main slot 44 and a slot pair 46. Slot pair 46 provides clearance for a screw pair 47 which is used to hold carriage 48 in sliding engagement with the under part of face 50.

Carriage collar 48 is seen to have a set screw 52 which can be used to lock a h-older assembly 15 which rotatably engages carriage collar 48. The lower portion of holder assembly 15 is prevented from moving axially in carriage collar 48 by a clamp 53 which also serves to secure conduit 96 to the bottom portion of holder assembly 15. An azimuth circle 54 rests on the top surface of a lower wall 80 (best seen in Fig. 3) which is part of holder assembly 15.

Azimuth circle 54 has engraved on its surface angular calibration marks as shown and has a lock screw 55 which can be used to lock azimuth circle 54 to an upper wall 78 (best seen in Fig. 3) which is part of holder assembly 15. A gem 73 is shown positioned on a top face 71 of a rotatable tip 70, rotatable tip 70 has an index 56 which is referenced to the angular calibration on azimuth circle 54.

Holder assembly 15 is best seen in Fig. 3 where its features are illustrated. Top face 71 has aperture 16 at its center. A tip 70 which contains the aforementioned parts is rotatably secured to an inner sleeve 84 by frictional forces between a circular inner wall 72 and inner sleeve 84. Inner sleeve 84 is rigidly fastened to a tube 116 and a support element 76 having upper wall 78 and lower wall 80 as its components.

Tube 116 has attached to itself by thread means an end member 94 which has threaded into it a fitting 114 for connection to a tube 112 which provides vacuum to holder assembly 15. End member 94 also provides support for a fiber-optic light tube 86 which includes a conventional fiber-optic bundle encased in tubing made out of any desirable material, such as for example, rubber, plastic or nylon. At one end of the light tube 86, an encasement sleeve 88 is affixed to the tube. The light tube 86 may be positioned within the inner sleeve 84 by a retainment device which includes a series of set screws 90 which are screwed into the sleeve 84 as shown. It is within the scope of the present invention to use any other retainment device to adjust the position of the encasement sleeve 88. The sleeve 88 is preferably positioned so that the light passing through the light tube is directed through the aperture 16. In addition, it is desirable to prevent the end of the light tube from being too close to the aperture as w-ill be further described.

An in-sert device 120, as seen in Fig. 3, may be provided to fit within the aperture 16. The insert device includes a bottom circular wall 122 which tightly fits into the aperture 16. An aperture 124 is smaller than the aperture 16 and is useful for holding specimens which may be smaller than those that can be accommodated by the aperture 16. Also , a flexible seal (not shown) may be applied to a top face 126 of the insert device 120 to create a better seal between the article and the insert device.

Fig. 4 shows a schematic of the light surface. A lamp, such as for example, a tungsten light bulb 130 directs light through a lens 134 which focuses the light onto a tip end 132 of the fiber-optic bundle encased in a sleeve 92. If desired, a conventional iris diaphragm 136 may be provided for controlling the brightness of the light which enters into the light tube. Also, a plurality of different colored optical filters 138 may be provided to change the color of the light passing through the light tube.

The conventional electrical aspects of the illumination device 20 which are required to power the light bulb 130 as well as the lens, diaphragm and filter, may be provided in the control box 98, as seen in Fig. 1. The vacuum device 18 may include a conventional vacuum pump (not shown) in the control box 98. The vacuum may be pulled through a tube 112 to a fitting 114 which is connected into the end member 94 as best seen in Fig. 3. The tube 116 which may be made of any desirable material such as for example, rubber, plastic or nylon, is connected to the end member 94 on one end. The other end of the tube 116 is connected between lower wall 80 and the inner sleeve 84. The ends of the tube can be sealed to the inner sleeve and end member in any conventional manner. The vacuum is now available at aperture 16. It is important that the sleeve 88 is not positioned too close to aperture 16 and cause any obstruction to the vacuum in the aperture.

In order to more fully understand the present invention, a description of its typical operation is provided.

Assuming electrical supply cord 108 has been plugged into a recepticle, switches 102 and 106 on control box 98 are turned on. This action provides vacuum and illumination. At aperture 16 a specimen such as gem 73 is placed on aperture 16 of rotatable tip 70 and focusing knob 25 adjusted to bring gem 73 into focus. Magnification adjustment 26 can now be set to the desired magnification. If gem 73 is too small for aperture 16 insert device 120 may be used. Since the light is passing through aperture 16 the gem 73 is highly visible and the vacuum present provides ease in placing the specimen on the tip 70 as well as holding the specimen in place as movable top section 42 is adjusted.

The rotatable joints formed by pivot rods 62 and 64 are adjusted so as to have resistance to rotation when movable top section 42 is left in a sui-table viewing position. Carriage collar 48 and lead screw 51 provide for adjustment of the position of holder assembly 69 on face 50. Although care is taken to position holder assembly 15 so that gem 73 will be in the field of view of optical assembly 22 it is possible that adjustment of movable top section 42 might move gem 73 out of the field of view of optical assembly 22, in which case lead screw 51 will move gem 73 into the field of view.

Rotatable tip 70 can be moved in order to bring different parts of gem 73 into view when high magnifications are used. The index 56 on rotatable tip 70 enables gem 73 to be oriented with respect to azimuth circle 54.

Generally an inclusion can best be seen through one facet of gem 73. The position of the inclusion with respect to the edge of the facet can be measured using azimuth circle 54.

Similarly index 68 and elevation circle 65 can be used to measure the movement of movable top section 42 about pivot rods 62 and 64.

It is obvious to one skilled in the art that there has been provided a stage for a microscope which allows for movement of the specimen while it remains in focus, is easy to adjust, provides a vacuum to hold the specimen and an illumination device extending th-erethrough and is relatively inexpensive to manufacture.

While there has been described what is at present considered to be the preferred embodiment of the invention, it will be obvious to those skilled in the art that various changes and modifications may be made therein without departing from the invention and it is, therefore, desired in the appended claims to cover all such changes and modifications as fall within the true spirit and scope of the invention.

What is Claimed is:

1. A stage for a microscope comprising:
(a) base means having an aperture therein for supporting an article to be viewed;
(b) vacuum means extending through said body means for holding the article on said aperture; and
(c) illumination means extending through said body means for illuminating said aperture.

2. The stage as defined in claim 1, further characterized in that said vacuum means includes a vacuum tube connected to said aperture.

3. The stage as defined in claim 2, further characterized in that said illumination means includes a fiber-optic light tube extending through said vacuum tube.

4. The stage as defined in claim 3, further characterized in that said illumination means includes mounting means for centering said light tube so that light passes through said aperture.

5. The stage as defined in claim 4, further characterized in that said illumination means includes optical filter means to change the color of light passing through said light tube.

6. The stage as defined in claim 5, further characterized in that said illumination means includes an iris diaphragm for changing the brightness of the light passing through said light tube.

7. The stage as defined in claim 3, further characterized in that said base means includes a rotatable tip means having the aperture extending therethrough, for rotating said aperture.

8. The stage as defined in claim 7, further characterized in that said rotatable tip means includes angular measurement means for measurement of said tip means rotation.

9.  The stage as defined in claim 8, further characterized in that insert means having an aperture therethrough are adapted to fit in the aperture of said tip means for accommodating different articles.

10.  The stage as defined in claim 1, further characterized in that said base means includes a stationary base section having a pair of wall surfaces, a movable top section having a pair of pivot rods adapted to rotate in said pair of wall surfaces whereby said aperture moves through an arc of approximately 180°.

11.  The stage as defined in claim 10, further characterized in that said base means includes angular measurement means for measuring the arcuate movement of said aperture.

12.  The stage as defined in claim 11, further characterized in that said stationary base section has a slot therein for accommodating said vacuum means and said illumination means.

13.  A stage for a microscope comprising:
(a) base means for supporting an article to be viewed;
(b) said base means including a stationary base section with a pair of wall surfaces;
(c) a movable top section with a pair of pivot rods adapted to rotate in said pair of wall surfaces through an arc of approximately 180°; and
(d) having angular measurement means for measuring said arc.

14.  The stage as defined in claim 13, further characterized in that vacuum means are associated with said base means for holding an article on said movable top section.

15. The stage as defined in claim 12, further characterized in that said rotating tip means are connected to said movable top section for rotating said article through an arc of 360° with respect to said stationary bottom section and having angular measurement means for measuring said rotation of said article.

FIG.1

FIG.4

FIG. 2

FIG. 3

# EUROPEAN SEARCH REPORT

| Category | Citation of document with indication, where appropriate, of relevant passages | Relevant to claim | CLASSIFICATION OF THE APPLICATION (Int. Cl. 3) |
|---|---|---|---|
| | **DOCUMENTS CONSIDERED TO BE RELEVANT** | | |
| | US - A - 3 826 558 (P.P. RASBERRY et al. )<br>* Claim 1; figure 3 * | 1,2,7,<br>10,13-<br>15 | G 02 B 21/26 |
| | FR - A - 1 563 868 (SOCIETE ALSA-CIENNE DE CONSTRUCTIONS ATOMIQUES DE TELECOMMUNICATIONS ET D' ELECTRONIQUE ALCATAL)<br>* Page 2, left-hand column, lines 10-18 and 35-40; figure 1 * | 1,2,7,<br>13,14 | |
| | DE - A - 2 705 092 (JENOPTIK JENA GmbH)<br>* Unique claim; figures 1,2 * | 1-3,7,<br>13,14 | **TECHNICAL FIELDS SEARCHED (Int.Cl. 3)**<br><br>G 02 B 21/24<br>21/26 |
| | US - A - 3 019 010 (H. DA COSTA)<br>* Figures 4,6 * | 1,13 | |
| | US - A - 3 549 232 (F. HUGLE et al.)<br>* Abstract; figure 3 * | 1,2,7 | |
| A | DE - B - 1 021 589 (ERNST LEITZ GmbH)<br>* Figure 1 * | 13 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| A | DE - B - 2 506 594 (M. EICKHORST)<br>* Column 1, line 57 - column 2, line 18; figure *<br><br>-- / . | 1,13 | &: member of the same patent family, corresponding document |

The present search report has been drawn up for all claims

| Place of search | Date of completion of the search | Examiner |
|---|---|---|
| The Hague | 13-10-1980 | HILTNER |

EPO Form 1503.1 06.78

## EUROPEAN SEARCH REPORT

European Patent
Office

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| AD | US - A - 3 778 131 (W.R. WANESKY) <br> * Abstract * | 1,2, 14 | |
| | | | **TECHNICAL FIELDS SEARCHED (Int. Cl. 3)** |

EPO Form 1503.2   06.78